# EUROPEAN PATENT SPECIFICATION

(11) **EP 3 901 500 B1**
(45) Date of publication and mention of the grant of the patent: **27.03.2024**
(21) Application number: 21169224.9
(22) Date of filing: 19.04.2021
(51) Int. Cl.: F16K 11/076

(54) **STRAIGHT SWITCHING DEVICE AND SHOWER**
DIREKTUMSCHALTVORRICHTUNG UND DUSCHE
DISPOSITIF DE COMMUTATION DROIT ET DOUCHE

(30) Priority: 17.04.2020 CN 202010305646
(43) Date of publication of application: 27.10.2021
(73) Proprietor: Xiamen Solex High-tech Industries Co., Ltd., 361000 Fujian (CN)
(72) Inventor: DAN, Tangjun, Xiamen, 361000 (CN); HU, Lihong, Xiamen, 361000 (CN)
(74) Representative: Verscht, Thomas Kurt Albert

(56) References cited:
- WO-A1-2021/012613
- CN-U- 206 582 359
- US-B1- 6 427 713

## Description

### FIELD OF THE DISCLOSURE

The present disclosure relates to a kitchen and a bathroom, and in particular relates to a straight switching device and a shower.

### BACKGROUND OF THE DISCLOSURE

Existing straight switching valves, by way of example, CN206582359U discloses a straight switching valve, which comprises a rotating portion and a fixed portion embedded together; the rotating portion is respectively disposed with a first water outlet and a second water outlet along an axial direction. An inner side of the fixed portion comprises an accommodating cavity extending in the axial direction. A side wall of the fixed portion are respectively disposed with a first sealing member and a second sealing member in communication with the accommodating cavity along the axial direction, and the first sealing member and the second sealing member define an angle in a radial direction. The fixed portion is further respectively disposed with a first water hole and a second water hole along the axial direction, wherein a water outflow direction of the first water hole is parallel to the axial direction, and a water outflow direction of the second water hole is perpendicular to the axial direction. The rotating portion is embedded in the accommodating cavity along the axial direction and rotates relative to the fixed portion about the axial direction in the accommodating cavity. When the first water outlet is in communication with the first water hole, the second sealing member seals the second water outlet. When the second water outlet is in communication with the second water hole, the first sealing member seals the first water outlet. In a switching method of the straight switching valve, a switching shaft rotates to change a waterway to achieve switching. A direction of the waterway can only be water inflow from a lower side, and a space is limited.

### BRIEF SUMMARY OF THE DISCLOSURE

The present disclosure provides a straight switching device and a shower, which overcomes the deficiencies of the shower in the background.

In order to solve the technical problems, a first technical solution of the present disclosure is as follows.

A straight switching device comprises:
A body portion, which is disposed with an inlet waterway and a mounting groove penetrating and in communication with the inlet waterway.

A water dividing shaft sleeve, which is configured to be relatively secured in the mounting groove, an isolation portion is secured in the water dividing shaft sleeve to enable the water dividing shaft sleeve to define two water dividing passages oppositely isolated, and each water dividing passage (i.e., each water dividing passage of the two water dividing passages) is concave to define a water dividing hole penetrating an inner side and an outer side.

A switching housing, which is disposed in the mounting groove and surrounds an outer side of the water dividing shaft sleeve, and the switching housing is configured to rotate relative to the body portion and the water dividing shaft sleeve; the switching housing is disposed with one or more water inlets penetrating an inner side and an outer side, a water dividing cavity configured to be in communication with the water dividing holes is defined between the switching housing and the water dividing shaft sleeve, the inlet waterway is in communication with the water dividing cavity by the mounting groove and the one or more water inlets; the switching housing is disposed with sealing portions configured to hermetically cooperate with the water dividing holes, the switching housing rotates to control the sealing portions to seal the water dividing holes whether or not to at least enable the two water dividing passages to be switched to be in communication with the water dividing cavity.

In an embodiment, the water dividing holes of the two water dividing passages of the water dividing shaft sleeve are separately disposed relative to an axis of the water dividing shaft sleeve and are separately disposed in a circumferential direction; the sealing portions configured to respectively cooperate with the water dividing holes is fixedly disposed in the switching housing, and when one of the sealing portions seals one of the water dividing holes, the other of the sealing portions and the other of the water dividing holes are staggered.

In an embodiment, the water dividing holes of the two water dividing passages are respectively a first water dividing hole and a second water dividing hole, and the sealing portions cooperating with the first water dividing hole and the second water dividing hole are respectively a first sealing portion and a second sealing portion; the switching housing is disposed with two water inlets (i.e., two water inlets of the one or more water inlets) separately disposed along the axis, the two water inlets are respectively a first water inlet and a second water inlet, and a radial angle between the two water inlets are 90 degrees.

In an embodiment, the switching housing is disposed with an assembly groove penetrating an inner side and an outer side, a holder bracket is disposed in the assembly groove, and the sealing portions are disposed on an inner wall of the holder bracket.

In an embodiment, the inner wall of the holder bracket is concave to define an annular groove, the sealing portions define arc-shaped structures and are cooperatively disposed in the annular groove, and the sealing portions hermetically cooperate with an outer peripheral wall of the water dividing shaft sleeve and are configured to surround the water dividing holes.

In an embodiment, inner walls of the sealing portions define the arc-shaped structures cooperating with the outer peripheral wall of the water dividing shaft sleeve.

In an embodiment, the holder bracket is disposed with a reverse catch, the holder bracket is inwardly disposed in the assembly groove of the switching housing, and the reverse catch abuts an inner wall of the switching housing.

In an embodiment, a first sealing ring is disposed between the switching housing and a groove wall of the mounting groove, a lower end of the water dividing shaft sleeve is disposed below the switching housing, and a second sealing ring is disposed between the lower end of the water dividing shaft sleeve and the groove wall of the mounting groove.

In an embodiment, a third sealing ring is disposed between the water dividing shaft sleeve and the switching housing, and the third sealing ring is disposed above the water dividing holes.

In an embodiment, which further comprises a handle (i.e., a switch handle) synchronously rotatably connected to the switching housing to drive the switching housing to rotate.

In an embodiment, the handle comprises a sleeve portion synchronously rotatably connected to an extending portion of the switching housing extending out of the mounting groove and a handle portion protruding from an outer side of the sleeve portion.

In an embodiment, the water dividing holes of the two water dividing passages of the water dividing shaft sleeve are separately disposed relative to an axis of the water dividing shaft sleeve; the sealing portions configured to respectively cooperate with the water dividing holes is fixedly disposed in the switching housing, and when one of the sealing portions seals one of the water dividing holes, the other of the sealing portions and the other of the water dividing holes are staggered.

In order to solve the technical problems, a second technical solution of the present disclosure is as follows.

A shower, which comprises the switching device, the body portion is further disposed with a cold water passage, a hot water passage and a control component, the control component is connected to the cold water passage, the hot water passage and the inlet waterway to control an opening-closing and water temperature.

Compared with the existing techniques, the technical solution has the following advantages.

The switching housing rotates to control the sealing portions to seal the water dividing holes whether or not to enable the two water dividing passage to be switched to be in communication with the water dividing cavity, therefore, water inflow from a side of a middle portion and water outflow flows upward and downward. A structure is simple, an occupied space is small, and a product is simple and beautiful.

### BRIEF DESCRIPTION OF THE DRAWINGS

The present disclosure will be further described below in combination with the accompanying drawings and embodiments.
Fig. 1 illustrates a perspective view of a shower in an embodiment.
Fig. 2 illustrates an exploded perspective view of partial components of the shower in the embodiment.
Fig. 3 illustrates a first cross-sectional view of the shower in the embodiment, when water flows upward.
Fig. 4 illustrates a second cross-sectional view of the shower in the embodiment, when the water flows upward.
Fig. 5 illustrates a third cross-sectional view of the shower in the embodiment, when the water flows downward.
Fig. 6 illustrates a fourth cross-sectional view of the shower in the embodiment, when the water flows downward.

Reference numbers: straight switching device A, body portion 1, water dividing shaft sleeve 2, switching housing 3, switch handle 4; body 11, control component 12, inlet waterway 111, mounting groove 112, cold water passage 113, hot water passage 114, cold-hot water joints 115 and 116, first convex ring 117, lower joint 118, control handle 121; isolation portion 21, first water dividing passage 22, second water dividing passage 23, first water dividing hole 221, second water dividing hole 231, second convex ring 241, first screw nut 242, second sealing ring 251, third sealing ring 252; first water inlet 311, second water inlet 312, water dividing cavity 32, first sealing portion 331, second sealing portion 332, assembly groove 35, holder bracket 35, reverse catch 351, annular groove 352, third convex ring 361, first sealing ring 371; handle portion 41, second screw nut 42.

### DETAILED DESCRIPTION OF THE EMBODIMENTS

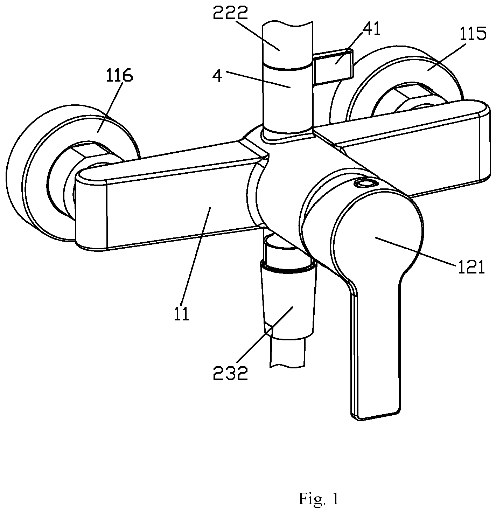

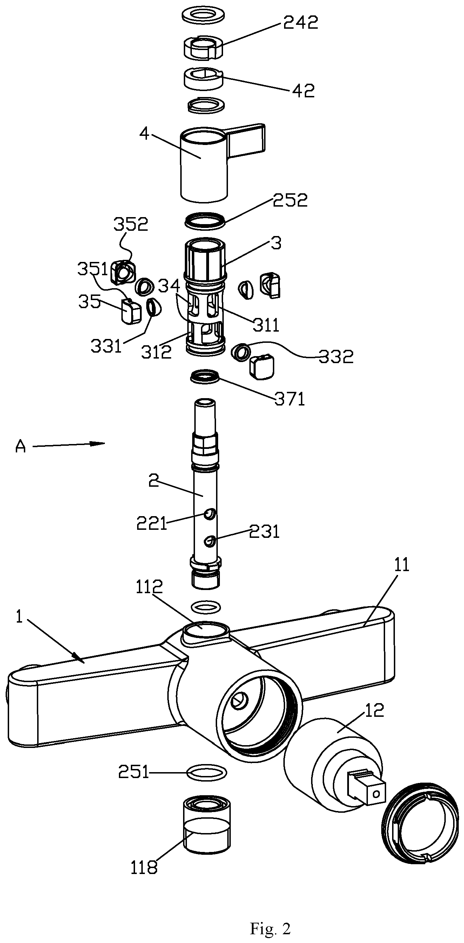

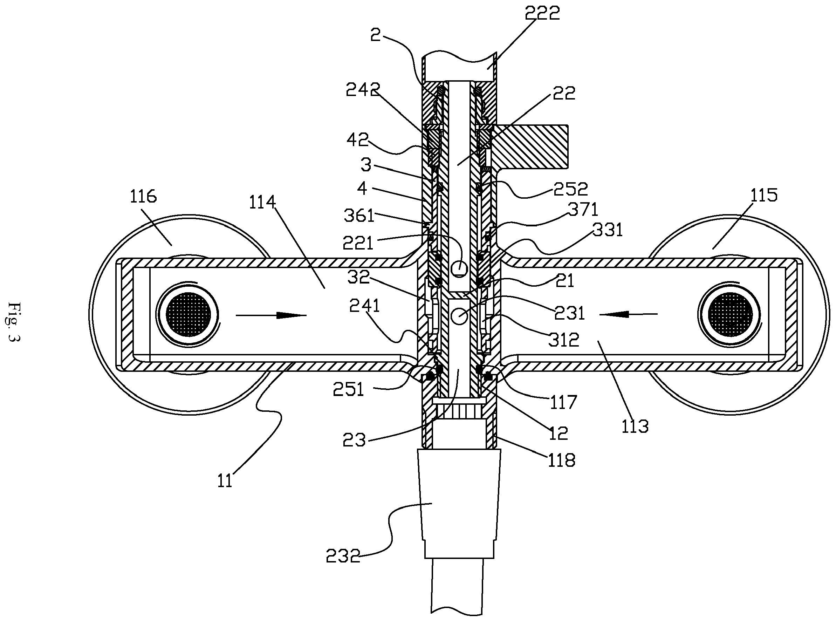

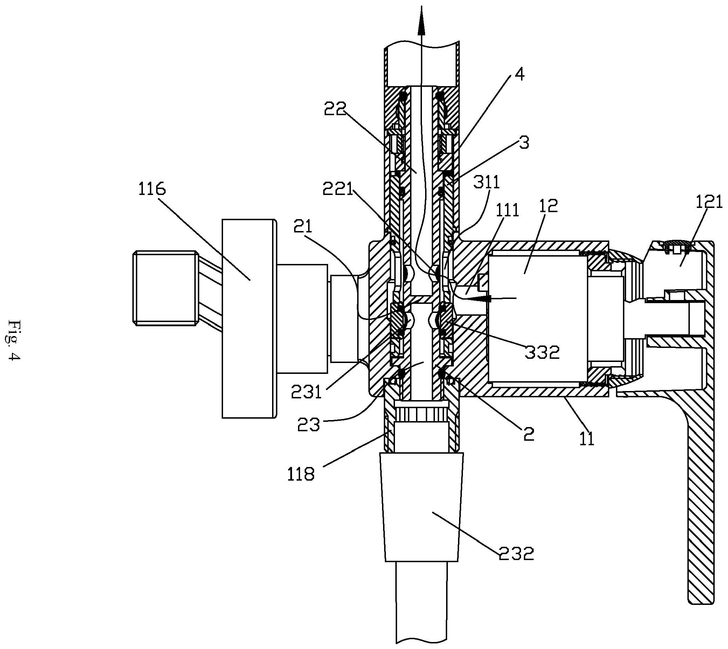

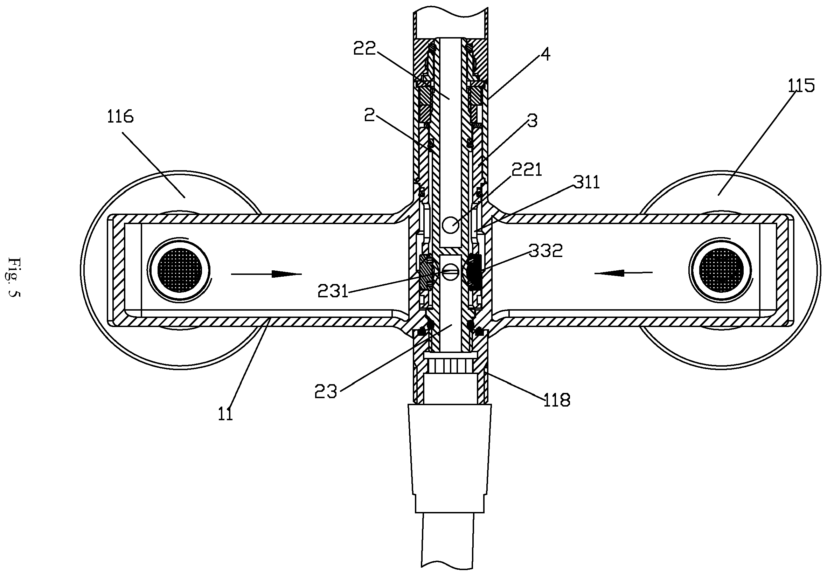

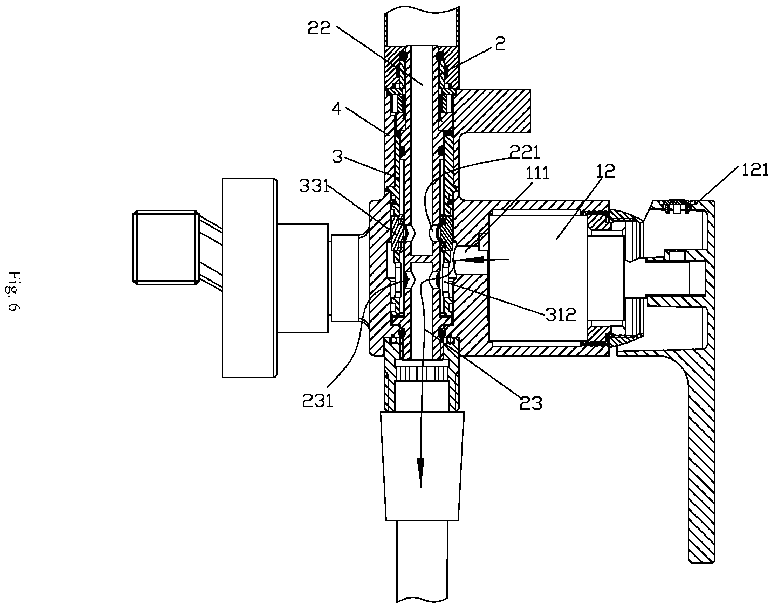

Referring to Figs. 1-6, an arrow in drawings indicates a direction of water flow. A shower comprises a straight switching device A. The straight switching device A comprises a body portion 1, a water dividing shaft sleeve 2, a switching housing 3 and a switch handle 4.

The body portion 1 comprises a body 11 and a control component 12. The body 11 is disposed with an inlet waterway 111, a mounting groove 112 penetrating and in communication with the inlet waterway 111, a cold water passage 113 and a hot water passage 114. A port of the inlet waterway 111 is disposed on a groove wall of the mounting groove 112, the body 11 is further connected to cold-hot water joints 115 and 116, and the cold-hot water joints 115 and 116 are respectively in communication with the cold water passage 113 and the hot water passage 114. The control component 12 is connected to the cold water passage 113, the hot water passage 114 and the inlet waterway 111 to control an opening-closing, water temperature and flow volume. The control component 12 is disposed with a control handle 121, the control component 12 is disposed on a middle portion of a front end of the body 11, and the control handle 121 is disposed on the middle portion of the front end of the body 11. It is convenient to be controlled for a user, and the control component 12 is existing techniques.

An isolation portion 21 is secured in the water dividing shaft sleeve 2 to enable the water dividing shaft sleeve 2 to define two water dividing passages 22 and 23 oppositely isolated, and each water dividing passage 22 or 23 of the two water dividing passages 22 and 23 is concave to define a water dividing hole 221 or 231 penetrating an inner side and an outer side. In this detailed embodiment, the water dividing shaft sleeve 2 is integrally formed. The water dividing shaft sleeve 2 is configured to be relatively secured in the mounting groove 112 of the body 1.

The switching housing 3 is disposed in the mounting groove 112 of the body 1 and surrounds an outer side of the water dividing shaft sleeve 2, and the switching housing 3 is configured to rotate relative to the body 1 and the water dividing shaft sleeve 2. The switching housing 3 is disposed with water inlets 311 and 312 penetrating an inner side and an outer side. A water dividing cavity 32 configured to be in communication with the water dividing holes 221 and 231 is disposed between the switching housing 3 and the water dividing shaft sleeve 2. The inlet waterway 111 is in communication with the water dividing cavity 32 through the mounting groove 112 and the water inlets 311 and 312 to achieve water inflow from a side. An inner side of the switching housing 3 is disposed with sealing portions 331 and 332 configured to hermetically cooperate with the water dividing holes 221 and 231, and the switching housing 3 rotates to control the sealing portions 331 and 332 to seal the water dividing holes 221 and 231 whether or not to at least enable the two water dividing passages 22 and 23 to be switched to be in communication the water dividing cavity 32.

The two water dividing passages 22 and 23 of the water dividing shaft sleeve 2 are respectively a first water dividing passage 22 facing upward and a second water dividing passage 23 facing downward. The water dividing hole of the first water dividing passage 22 is a first water dividing hole 221 (i.e., first water dividing holes 221), and the water dividing hole of the second water dividing passage 23 is a second water dividing hole 231 (i.e., second water dividing holes 231). The first water dividing hole 221 and the second water dividing hole 231 are separately disposed relative to an axis of the water dividing shaft sleeve 2, and the first water dividing holes 221 and the second water dividing holes 231 are separately disposed in a circumferential direction of the water dividing shaft sleeve 2. The sealing portions 331 and 332 configured to respectively cooperate with the water dividing holes 221 and 231 (i.e., two water dividing holes 221 and 231) is fixedly disposed in the switching housing 3. The sealing portions cooperating with the first water dividing hole 221 and the second water dividing hole 231 are respectively a first sealing portion 331 and a second sealing portion 332. Due to an arrangement that is separately disposed along an axial direction and the circumferential direction, the sealing portions are respectively cooperate with the water dividing holes, when one of the sealing portions seals one of the water dividing holes, the other of the sealing portions and the other of the water dividing holes are staggered. For example, when the first sealing portion 331 blocks the first water dividing hole 221, the second sealing portion 332 and the second water dividing hole 232 are staggered, so that the second water dividing hole 232 is in communication with the water dividing cavity 22, water flows out of the second water dividing passage 23. Vice versa, the water flows out of the first water dividing passage 22. As needed, the two can be both staggered due to the rotating. At this time, the water flows out of both the two water dividing passages 22 and 23. Further, the switching housing 3 is disposed with a first water inlet 311 and a second water inlet 312 separately disposed up and down. A radial angle of the first water inlet 311 and the second water inlet 312 is 90 degrees to improve waterway stability and design facility.

The switching housing 3 is disposed with an assembly groove 34 penetrating an inner side and an outer side, and a holder bracket 35 is disposed in the assembly groove 34. The disposing is as follows, for example, the holder bracket 35 is disposed with a reverse catch 351, the holder bracket 35 cooperates with and is inwardly disposed in the assembly groove 35 of the switching housing 3, and the reverse catch 351 abuts an inner wall of the switching housing 3. This structure can improve an assembly stability, firmness and facility. The sealing portions 331 and 332 are disposed on an inner wall of the holder bracket 35. The disposing is as follows, for example, the inner wall of the holder bracket 35 is concave to define an annular groove 352, the sealing portions 331 and 332 define arc-shaped structures and are cooperatively disposed in the annular groove 352, the sealing portions 331 and 332 hermetically cooperate with an outer peripheral wall of the water dividing shaft sleeve 2 and are configured to surround the water dividing holes 221 and 231. This structure is used to achieve sealing, to improve hermeticity, so that interference is avoided during a rotation, The sealing portions themselves can further achieve guidance and reduce shaking during the rotation. Inner walls of the sealing portions 331 and 332 define the arc-shaped structures and cooperate with the outer peripheral wall of the water dividing shaft sleeve 2, so that interference is avoided during a rotation of the switching housing, to reduce shaking during the rotation, and to improve a hermeticity stability. The structure is used to facilitate assembly, to improve hermeticity, and to simplify the structure, and the structure is compact.

The switch handle 4 is relatively secured to an upper end of the switching housing 3 to enable the switch handle 4 to drive the switching housing 3 to rotate. The switch handle 4 comprises a sleeve portion configured to relatively fixedly surround an extending portion of the switching housing 3 extending out of the mounting groove 112 and a handle portion 41 protruding from an outer side of the sleeve portion.

In the detailed structure: a lower portion of the groove wall of the mounting groove 112 of the body 1 inwardly protrudes to define a first convex ring 117, the water dividing shaft sleeve 2 comprises a lower end disposed below the switching housing 3, an outer side of the lower end protrudes to define a second convex ring 241, and the second convex ring 241 abuts the first convex ring 117. In addition, a lower joint 118 is provided, and the lower joint 118 is secured to the lower end portion of the water dividing shaft sleeve 2 and abuts a bottom surface of the body portion 1. The water dividing shaft sleeve 2 is secured to the mounting groove 112 of the body portion 1 due to the above-mentioned structure. The lower joint 118 is, for example, screwed to the water dividing shaft sleeve 2 and is in communication with the second water dividing passage 23, which is convenient for assembly and is further configured to be in communication with other portions, for example, a hose of a hand-held shower. The sleeve portion of the switch handle 4 synchronously rotatably surrounds an outer side of the upper end of the switching housing 3. For example, the switch handle is disposed with an opening, and an outer side of the switching housing is disposed with a protrusion, and the protrusion cooperates with the opening. An upper end portion of the water dividing shaft sleeve 2 extends out of an upper side of the switching housing 3, the water dividing shaft sleeve 2 is screwed to a first screw nut 242, an upper portion of the switching housing 3 outwardly protrudes to define a third convex ring 361, and the third convex ring 361 abuts an upper side of the body 11. A second screw nut 42 is screwed to an inner side of the sleeve portion of the switch handle 4, the first screw nut 242 abuts an upper side of the second nut 42, and the sleeve portion of the switch handle 4 abuts an upper side of the third convex ring 361. The switching housing 3, the water dividing shaft sleeve 2 and the switch handle 4 are axially locked due to the above-mentioned structure, which is convenient for assembly.

A first sealing ring 371 is disposed between the upper portion of the switching housing 3 and an upper port of the groove wall of the mounting groove 112, and a second sealing ring 251 is disposed between the lower end of the water dividing shaft sleeve 2 and a lower port of the groove wall of the mounting groove 112. A third sealing ring 252 is disposed between an upper section of the water dividing shaft sleeve 2 and an upper section of the switching housing 3, and the third sealing ring 252 is disposed above the first water dividing hole.

In the shower of this embodiment, after hot water and cold water are mixed by the control component 12, the mixed water (i.e., warm water) flows through the inlet waterway 111 into the water dividing cavity 32, so that water inflow from a side of a middle portion, and water outflow flows upward and downward. A rotation angle of the switch handle 4 is 90 degrees. When the switch handle 4 faces a front side, water flows out of the second water dividing passage 23. That is, water flows downward, the second water division passage 23 is, for example, in communication with the hand-held shower through the hose. Rotates 90 degrees in counterclockwise direction, water flows out of the first water dividing passage 22. That is, water flows upward, and the first water dividing passage 22 is, for example, in communication with a top shower through a hard pipe 222.

The invention may be summarized as follows: The present disclosure discloses a straight switching device and a shower. The straight switching device comprises a body portion, a water dividing shaft sleeve and a switching housing. The body portion is disposed with an inlet waterway and a mounting groove. The water dividing shaft sleeve is configured to be relatively secured in the mounting groove, the water dividing shaft sleeve defines two water dividing passages oppositely isolated, and each water dividing passage is concave to define a water dividing hole. The switching housing is rotatably disposed in the mounting groove and surrounds an outer side of the water dividing shaft sleeve; the switching housing is disposed with one or more water inlets, a water dividing cavity configured to be in communication with the water dividing holes is defined between the switching housing and the water dividing shaft sleeve, the inlet waterway is in communication with the water dividing cavity by the mounting groove and the one or more water inlets; the switching housing is disposed with sealing portions configured to hermetically cooperate with the water dividing holes, the switching housing rotates to control the sealing portions to seal the water dividing holes whether or not to at least achieve switching. Which has the following advantages: water inflow from a side of a middle portion and water outflow flows upward and downward. A structure is simple, an occupied space is small, and a product is simple and beautiful.

The aforementioned embodiments are merely some embodiments of the present disclosure, and the scope of the disclosure is not limited thereto. Thus, it is intended that the present disclosure cover any modifications and variations of the presently presented embodiments provided they are made without departing from the appended claims and the specification of the present disclosure by those skilled in the art.

## Claims

1. A straight switching device (A) comprises:
a body portion (1), which is disposed with an inlet waterway (111) and a mounting groove (112) penetrating and in communication with the inlet waterway (111);
wherein the device further comprises:
a water dividing shaft sleeve (2), which is configured to be relatively secured in the mounting groove (112), an isolation portion (21) is secured in the water dividing shaft sleeve (2) to enable the water dividing shaft sleeve (2) to define two water dividing passages (22, 23) oppositely isolated, and each water dividing passage (22, 23) is concave to define a water dividing hole (221, 231) penetrating an inner side and an outer side; and
a switching housing (3), which is disposed in the mounting groove (112) and surrounds an outer side of the water dividing shaft sleeve (2), and the switching housing (3) is configured to rotate relative to the body portion (1) and the water dividing shaft sleeve (2); the switching housing (3) is disposed with one or more water inlets (311, 312) penetrating an inner side and an outer side, a water dividing cavity (32) configured to be in communication with the water dividing holes (221, 231) is defined between the switching housing (3) and the water dividing shaft sleeve (2), the inlet waterway (111) is in communication with the water dividing cavity (32) by the mounting groove (112) and the one or more water inlets (311, 312); the switching housing (3) is disposed with sealing portions (331, 332) configured to hermetically cooperate with the water dividing holes (221, 231), the switching housing (3) rotates to control the sealing portions (331, 332) to seal the water dividing holes (221, 231) whether or not to at least enable the two water dividing passages (22, 23) to be switched to be in communication with the water dividing cavity (32).

2. The straight switching device (A) according to claim 1, **characterized in that**: the water dividing holes (221, 231) of the two water dividing passages (22, 23) of the water dividing shaft sleeve (2) are separately disposed relative to an axis of the water dividing shaft sleeve (2) and are separately disposed in a circumferential direction; the sealing portions (331, 332) configured to respectively cooperate with the water dividing holes (221, 231) are fixedly disposed in the switching housing (3), and when one of the sealing portions (331, 332) seals one of the water dividing holes (221, 231), the other of the sealing portions (331, 332) and the other of the water dividing holes (221, 231) are staggered.

3. The straight switching device (A) according to claim 1 and/or 2, **characterized in that**: the water dividing holes (221, 231) of the two water dividing passages (22, 23) are respectively a first water dividing hole (221) and a second water dividing hole (231), and the sealing portions (331, 332) cooperating with the first water dividing hole (221) and the second water dividing hole (231) are respectively a first sealing portion (331) and a second sealing portion (332); the switching housing (3) is disposed with two water inlets (311, 312) separately disposed along the axis, the two water inlets (311, 312) are respectively a first water inlet (311) and a second water inlet (312), and a radial angle between the two water inlets (311, 312) is 90 degrees.

4. The straight switching device (A) according to any one or more of claims 1 to 3, **characterized in that**: the switching housing (3) is disposed with an assembly groove (34) penetrating an inner side and an outer side, a holder bracket (35) is disposed in the assembly groove (34), and the sealing portions (331, 332) are disposed on an inner wall of the holder bracket (35).

5. The straight switching device (A) according to claim 4, **characterized in that**: the inner wall of the holder bracket (35) is concave to define an annular groove (352), the sealing portions (331, 332) define arc-shaped structures and are cooperatively disposed in the annular groove (352), and the sealing portions (331, 332) hermetically cooperate with an outer peripheral wall of the water dividing shaft sleeve (2) and are configured to surround the water dividing holes (221, 231).

6. The straight switching device (A) according to claim 5, **characterized in that**: inner walls of the sealing portions (331, 332) define the arc-shaped structures cooperating with the outer peripheral wall of the water dividing shaft sleeve (2).

7. The straight switching device (A) according to any one or more of claims 4 to 6, **characterized in that**: the holder bracket (35) is disposed with a reverse catch (351), the holder bracket (35) is inwardly disposed in the assembly groove (34) of the switching housing (3), and the reverse catch (351) abuts an inner wall of the switching housing (3).

8. The straight switching device (A) according to any one or more of claims 1 to 7, **characterized in that**: a first sealing ring (371) is disposed between the switching housing (3) and a groove wall of the mounting groove (112), a lower end of the water dividing shaft sleeve (2) is disposed below the switching housing (3), and a second sealing ring (251) is disposed between the lower end of the water dividing shaft sleeve (2) and the groove wall of the mounting groove (112).

9. The straight switching device (A) according to any one or more of claims 1 to 8, **characterized in that**: a third sealing ring (252) is disposed between the water dividing shaft sleeve (2) and the switching housing (3), and the third sealing ring (252) is disposed above the water dividing holes (221, 231).

10. The straight switching device (A) according to any one or more of claims 1 to 9, **characterized in that**: it further comprises a handle (4) synchronously rotatably connected to the switching housing (3) to drive the switching housing (3) to rotate.

11. The straight switching device (A) according to claim 10, **characterized in that**: the handle (4) comprises a sleeve portion synchronously rotatably connected to an extending portion of the switching housing (3) extending out of the mounting groove (112) and a handle portion (41) protruding from an outer side of the sleeve portion.

12. The straight switching device (A) according to any one or more of claims 1 to 11, **characterized in that**: the water dividing holes (221, 231) of the two water dividing passages (22, 23) of the water dividing shaft sleeve (2) are separately disposed relative to an axis of the water dividing shaft sleeve (2); the sealing portions (331, 332) configured to respectively cooperate with the water dividing holes (221, 231) are fixedly disposed in the switching housing (3), and when one of the sealing portions (331, 332) seals one of the water dividing holes (221, 231), the other of the sealing portions (331, 332) and the other of the water dividing holes (221, 231) are staggered.

13. A shower which comprises the straight switching device (A) according to any one or more of claims 1 to 12, the body portion (1) is further disposed with a cold water passage (113), a hot water passage (114) and a control component (12), the control component (12) is connected to the cold water passage (113), the hot water passage (114) and the inlet waterway (111) to control an opening-closing and water temperature.

## Patentansprüche

1. Eine gerade Schalteinrichtung (A), die folgendes aufweist:
einen Körperteil (1), welcher mit einem Einlasswasserweg (111) und einer Befestigungsnut (112), die den Einlasswasserweg (111) durchdringt und mit diesem in Verbindung steht, angeordnet ist;
wobei die Einrichtung ferner folgendes aufweist:
eine Wasserteilungsschafthülse (2), welche konfiguriert ist, um relativ in der Befestigungsnut (112) gesichert zu sein, ein Isolationsteil (21) ist in der Wasserteilungsschafthülse (2) gesichert, um der Wasserteilungsschafthülse (2) zu ermöglichen, zwei gegenüberliegend isolierte Wasserteilungsdurchgänge (22, 23) zu definieren, und jeder Wasserteilungsdurchgang (22, 23) ist konkav, um ein Wasserteilungsloch (221, 231) zu definieren, das eine Innenseite und eine Außenseite durchdringt; und
ein Schaltgehäuse (3), welches in der Befestigungsnut (112) angeordnet ist und eine Außenseite der Wasserteilungsschafthülse (2) umgibt, und das Schaltgehäuse (3) ist konfiguriert, um sich relativ zu dem Körperteil (1) und der Wasserteilungsschafthülse (2) zu drehen; das Schaltgehäuse (3) ist mit einem oder mehreren Wassereinlässen (311, 312) angeordnet, die eine Innenseite und eine Außenseite durchdringen, ein Wasserteilungshohlraum (32), der konfiguriert ist, um mit den Wasserteilungslöchern (221, 231) in Verbindung zu stehen, ist zwischen dem Schaltgehäuse (3) und der Wasserteilungsschafthülse (2) definiert, der Einlasswasserweg (111) steht durch die Befestigungsnut (112) und den einen oder die mehreren Wassereinlässe (311, 312) mit dem Wasserteilungshohlraum (32) in Verbindung; das Schaltgehäuse (3) ist mit Dichtungsteilen (331, 332) angeordnet, die konfiguriert sind, um hermetisch mit den Wasserteilungslöchern (221, 231) zusammenzuarbeiten, das Schaltgehäuse (3) dreht sich, um die Dichtungsteile (331, 332) zu steuern, um die Wasserteilungslöcher (221, 231) abzudichten, und zwar ob oder ob nicht, um wenigstens den zwei Wasserteilungsdurchgängen (22, 23) zu ermöglichen, geschaltet zu werden, um mit dem Wasserteilungshohlraum (32) in Verbindung zu stehen.

2. Die gerade Schalteinrichtung (A) nach Anspruch 1, **dadurch gekennzeichnet, dass**: die Wasserteilungslöcher (221, 231) der zwei Wasserteilungsdurchgänge (22, 23) der Wasserteilungsschafthülse (2) relativ zu einer Achse der Wasserteilungsschafthülse (2) separat angeordnet sind und in einer Umfangsrichtung separat angeordnet sind; die Dichtungsteile (331, 332), die konfiguriert sind, um jeweils mit den Wasserteilungslöchern (221, 231) zusammenzuarbeiten, sind fest im Schaltgehäuse (3) angeordnet, und wenn einer der Dichtungsteile (331, 332) eines der Wasserteilungslöcher (221, 231) abdichtet, sind der andere der Dichtungsteile (331, 332) und das andere der Wasserteilungslöcher (221, 231) versetzt.

3. Die gerade Schalteinrichtung (A) nach Anspruch 1 und/oder 2, **dadurch gekennzeichnet, dass**: die Wasserteilungslöcher (221, 231) der zwei Wasserteilungsdurchgänge (22, 23) jeweils ein erstes Wasserteilungsloch (221) und ein zweites Wasserteilungsloch (231) sind, und die Dichtungsteile (331, 332), die mit dem ersten Wasserteilungsloch (221) und dem zweiten Wasserteilungsloch (231) zusammenarbeiten, jeweils ein erster Dichtungsteil (331) und ein zweiter Dichtungsteil (332) sind; das Schaltgehäuse (3) mit zwei Wassereinlässen (311, 312) angeordnet ist, die separat entlang der Achse angeordnet sind, die zwei Wassereinlässe (311, 312) jeweils ein erster Wassereinlass (311) und ein zweiter Wassereinlass (312) sind, und ein radialer Winkel zwischen den zwei Wassereinlässen (311, 312) 90 Grad ist.

4. Die gerade Schalteinrichtung (A) nach einem oder mehreren der Ansprüche 1 bis 3, **dadurch gekennzeichnet, dass**: das Schaltgehäuse (3) mit einer Anordnungsnut (34) angeordnet ist, die eine Innenseite und eine Außenseite durchdringt, eine Haltespange (35) in der Anordnungsnut (34) angeordnet ist, und die Dichtungsteile (331, 332) an einer Innenwand der Haltespange (35) angeordnet sind.

5. Die gerade Schalteinrichtung (A) nach Anspruch 4, **dadurch gekennzeichnet, dass**: die Innenwand der Haltespange (35) konkav ist, um eine Ringnut (352) zu definieren, die Dichtungsteile (331, 332) bogenförmige Strukturen definieren und zusammenarbeitend in der Ringnut (352) angeordnet sind, und die Dichtungsteile (331, 332) hermetisch mit einer Außenumfangswand der Wasserteilungsschafthülse (2) zusammenarbeiten und konfiguriert sind, um die Wasserteilungslöcher (221, 231) zu umgeben.

6. Die gerade Schalteinrichtung (A) nach Anspruch 5, **dadurch gekennzeichnet, dass**: Innenwände der Dichtungsteile (331, 332) die bogenförmigen Strukturen definieren, die mit der Außenumfangswand der Wasserteilungsschafthülse (2) zusammenarbeiten.

7. Die gerade Schalteinrichtung (A) nach einem oder mehreren der Ansprüche 4 bis 6, **dadurch gekennzeichnet, dass**: die Haltespange (35) mit einer Umkehrsperre (351) angeordnet ist, die Haltespange (35) nach innen in der Anordnungsnut (34) des Schaltgehäuses (3) angeordnet ist, und die Umkehrsperre (351) an einer Innenwand des Schaltgehäuses (3) anliegt.

8. Die gerade Schalteinrichtung (A) nach einem oder mehreren der Ansprüche 1 bis 7, **dadurch gekennzeichnet, dass**: ein erster Dichtungsring (371) zwischen dem Schaltgehäuse (3) und einer Nutwand der Befestigungsnut (112) angeordnet ist, ein unteres Ende der Wasserteilungsschafthülse (2) unterhalb des Schaltgehäuses (3) angeordnet ist, und ein zweiter Dichtungsring (251) zwischen dem unteren Ende der Wasserteilungsschafthülse (2) und der Nutwand der Befestigungsnut (112) angeordnet ist.

9. Die gerade Schalteinrichtung (A) nach einem oder mehreren der Ansprüche 1 bis 8, **dadurch gekennzeichnet, dass**: ein dritter Dichtungsring (252) zwischen der Wasserteilungsschafthülse (2) und dem Schaltgehäuse (3) angeordnet ist, und der dritte Dichtungsring (252) über den Wasserteilungslöchem (221, 231) angeordnet ist.

10. Die gerade Schalteinrichtung (A) nach einem oder mehreren der Ansprüche 1 bis 9, **dadurch gekennzeichnet, dass**: sie ferner einen Griff (4) aufweist, der synchron drehbar mit dem Schaltgehäuse (3) verbunden ist, um das Schaltgehäuse (3) anzutreiben, zu drehen.

11. Die gerade Schalteinrichtung (A) nach Anspruch 10, **dadurch gekennzeichnet, dass**: der Griff (4) einen Hülsenteil, der synchron drehbar mit einem Erstreckungsteil des Schaltgehäuses (3) verbunden ist, das sich aus der Befestigungsnut (112) heraus erstreckt, und einen Griffteil (41), der von einer Außenseite des Hülsenteils hervorsteht, aufweist.

12. Die gerade Schalteinrichtung (A) nach einem oder mehreren der Ansprüche 1 bis 11, **dadurch gekennzeichnet, dass**: die Wasserteilungslöcher (221, 231) der zwei Wasserteilungsdurchgänge (22, 23) der Wasserteilungsschafthülse (2) relativ zu einer Achse der Wasserteilungsschafthülse (2) separat angeordnet sind; die Dichtungsteile (331, 332), die konfiguriert sind, um jeweils mit den Wasserteilungslöchern (221, 231) zusammenzuarbeiten, fest im Schaltgehäuse (3) angeordnet sind, und wenn einer der Dichtungsteile (331, 332) eines der Wasserteilungslöcher (221, 231) abdichtet, sind der andere der Dichtungsteile (331, 332) und das andere der Wasserteilungslöcher (221, 231) versetzt.

13. Eine Dusche, welche die gerade Schalteinrichtung (A) nach einem oder mehreren der Ansprüche 1 bis 12 aufweist, wobei der Körperteil (1) ferner mit einem Kaltwasserdurchgang (113), einem Warmwasserdurchgang (114) und einer Steuerkomponente (12) angeordnet ist, wobei die Steuerkomponente (12) mit dem Kaltwasserdurchgang (113), dem Heißwasserdurchgang (114) und dem Einlasswasserweg (111) verbunden ist, um ein Öffnen-Schließen und eine Wassertemperatur zu steuern.

## Revendications

1. Dispositif de commutation droit (A) qui comprend :
une portion de corps (1), qui est dotée d'une voie d'eau d'entrée (111) et d'une rainure de montage (112) pénétrant dans et en communication avec la voie d'eau d'entrée (111) ;
dans lequel le dispositif comprend en outre :
un manchon d'arbre de séparation d'eau (2), qui est configuré pour être relativement fixé dans la rainure de montage (112), une portion d'isolation (21) est fixée dans le manchon d'arbre de séparation d'eau (2) pour permettre au manchon d'arbre de séparation d'eau (2) de définir deux passages de séparation d'eau (22, 23) isolés de manière opposée, et chaque passage de séparation d'eau (22, 23) est concave pour définir un trou de séparation d'eau (221, 231) pénétrant dans un côté intérieur et un côté extérieur ; et
un logement de commutation (3), qui est disposé dans la rainure de montage (112) et entoure un côté extérieur du manchon d'arbre de séparation d'eau (2), et le logement de commutation (3) est configuré pour tourner par rapport à la portion de corps (1) et au manchon d'arbre de séparation d'eau (2) ; le logement de commutation (3) est doté d'une ou plusieurs entrées d'eau (311, 312) pénétrant dans un côté intérieur et un côté extérieur, une cavité de séparation d'eau (32) configurée pour être en communication avec les trous de séparation d'eau (221, 231) est définie entre le logement de commutation (3) et le manchon d'arbre de séparation d'eau (2), la voie d'eau d'entrée (111) est en communication avec la cavité de séparation d'eau (32) par la rainure de montage (112) et les une ou plusieurs entrées d'eau (311, 312) ; le logement de commutation (3) est doté de portions d'étanchéité (331, 332) configurées pour coopérer hermétiquement avec les trous de séparation d'eau (221, 231), le logement de commutation (3) tourne pour commander les portions d'étanchéité (331, 332) pour sceller les trous de séparation d'eau (221, 231) pour au moins permettre ou non aux deux passages de séparation d'eau (22, 23) d'être commutés pour être en communication avec la cavité de séparation d'eau (32).

2. Dispositif de commutation droit (A) selon la revendication 1, **caractérisé en ce que** : les trous de séparation d'eau (221, 231) des deux passages de séparation d'eau (22, 23) du manchon d'arbre de séparation d'eau (2) sont disposés séparément par rapport à un axe du manchon d'arbre de séparation d'eau (2) et sont disposés séparément dans une direction circonférentielle ; les portions d'étanchéité (331, 332) configurées pour coopérer respectivement avec les trous de séparation d'eau (221, 231) sont disposées de manière fixe dans le logement de commutation (3), et lorsqu'une des portions d'étanchéité (331, 332) scelle un des trous de séparation d'eau (221, 231), l'autre des portions d'étanchéité (331, 332) et l'autre des trous de séparation d'eau (221, 231) sont décalés.

3. Dispositif de commutation droit (A) selon la revendication 1 et/ou 2, **caractérisé en ce que** : les trous de séparation d'eau (221, 231) des deux passages de séparation d'eau (22, 23) sont respectivement un premier trou de séparation d'eau (221) et un deuxième trou de séparation d'eau (231), et les portions d'étanchéité (331, 332) coopérant avec le premier trou de séparation d'eau (221) et le deuxième trou de séparation d'eau (231) sont respectivement une première portion d'étanchéité (331) et une deuxième portion d'étanchéité (332) ; le logement de commutation (3) est doté de deux entrées d'eau (311, 312) disposées séparément le long de l'axe, les deux entrées d'eau (311, 312) sont respectivement une première entrée d'eau (311) et une deuxième entrée d'eau (312), et un angle radial entre les deux entrées d'eau (311, 312) est de 90 degrés.

4. Dispositif de commutation droit (A) selon l'une ou plusieurs des revendications 1 à 3, **caractérisé en ce que** : le logement de commutation (3) est doté d'une rainure d'assemblage (34) pénétrant dans un côté intérieur et un côté extérieur, un support de maintien (35) est disposé dans la rainure d'assemblage (34), et les portions d'étanchéité (331, 332) sont disposées sur une paroi intérieure du support de maintien (35).

5. Dispositif de commutation droit (A) selon la revendication 4, **caractérisé en ce que** : la paroi intérieure du support de maintien (35) est concave pour définir une rainure annulaire (352), les portions d'étanchéité (331, 332) définissent des structures en forme d'arc et sont disposées en coopération dans la rainure annulaire (352), et les portions d'étanchéité (331, 332) coopèrent hermétiquement avec une paroi périphérique extérieure du manchon d'arbre de séparation d'eau (2) et sont configurées pour entourer les trous de séparation d'eau (221, 231).

6. Dispositif de commutation droit (A) selon la revendication 5, **caractérisé en ce que** : des parois intérieures des portions d'étanchéité (331, 332) définissent les structures en forme d'arc coopérant avec la paroi périphérique extérieure du manchon d'arbre de séparation d'eau (2).

7. Dispositif de commutation droit (A) selon l'une ou plusieurs des revendications 4 à 6, **caractérisé en ce que** : le support de maintien (35) est doté d'une prise inversée (351), le support de maintien (35) est disposé vers l'intérieur dans la rainure d'assemblage (34) du logement de commutation (3), et la prise inversée (351) vient buter contre une paroi intérieure du logement de commutation (3).

8. Dispositif de commutation droit (A) selon l'une ou plusieurs des revendications 1 à 7, **caractérisé en ce que** : un premier anneau d'étanchéité (371) est disposé entre le logement de commutation (3) et une paroi de rainure de la rainure de montage (112), une extrémité inférieure du manchon d'arbre de séparation d'eau (2) est disposée en dessous du logement de commutation (3), et un deuxième anneau d'étanchéité (251) est disposé entre l'extrémité inférieure du manchon d'arbre de séparation d'eau (2) et la paroi de rainure de la rainure de montage (112).

9. Dispositif de commutation droit (A) selon l'une ou plusieurs des revendications 1 à 8, **caractérisé en ce que** : un troisième anneau d'étanchéité (252) est disposé entre le manchon d'arbre de séparation d'eau (2) et le logement de commutation (3), et le troisième anneau d'étanchéité (252) est disposé au-dessus des trous de séparation d'eau (221, 231).

10. Dispositif de commutation droit (A) selon l'une ou plusieurs des revendications 1 à 9, **caractérisé en ce que** : il comprend en outre une poignée (4) reliée de manière rotative et de manière synchrone au logement de commutation (3) pour entraîner le logement de commutation (3) pour qu'il tourne.

11. Dispositif de commutation droit (A) selon la revendication 10, **caractérisé en ce que** : la poignée (4) comprend une portion de manchon reliée de manière rotative et de manière synchrone à une portion d'extension du logement de commutation (3) s'étendant hors de la rainure de montage (112) et une portion de poignée (41) faisant saillie à partir d'un côté extérieur de la portion de manchon.

12. Dispositif de commutation droit (A) selon l'une ou plusieurs des revendications 1 à 11, **caractérisé en ce que** : les trous de séparation d'eau (221, 231) des deux passages de séparation d'eau (22, 23) du manchon d'arbre de séparation d'eau (2) sont disposés séparément par rapport à un axe du manchon d'arbre de séparation d'eau (2) ; les portions d'étanchéité (331, 332) configurées pour coopérer respectivement avec les trous de séparation d'eau (221, 231) sont disposées de manière fixe dans le logement de commutation (3), et lorsqu'une des portions d'étanchéité (331, 332) scelle un des trous de séparation d'eau (221, 231), l'autre des portions d'étanchéité (331, 332) et l'autre des trous de séparation d'eau (221, 231) sont décalés.

13. Douche qui comprend le dispositif de commutation droit (A) selon l'une ou plusieurs des revendications 1 à 12, la portion de corps (1) est en outre dotée d'un passage d'eau froide (113), d'un passage d'eau chaude (114) et d'un composant de commande (12), le composant de commande (12) est relié au passage d'eau froide (113), au passage d'eau chaude (114) et à la voie d'eau d'entrée (111) pour commander une ouverture-fermeture et une température d'eau.
